# EUROPEAN PATENT APPLICATION

(11) **EP 2 587 844 A2**
(43) Date of publication of application: **01.05.2013**
(21) Application number: 12187390.5
(22) Date of filing: 05.10.2012
(51) Int. Cl.: H04W 4/00, H04W 4/02

(54) **NFC tag location**

(30) Priority: 08.10.2011 US 201161545124 P
(71) Applicant: Thinglink Oy, 00100 Helsinki (FI)
(72) Inventor: Jalkanen, Janne, 02160 Espoo (FI)
(74) Representative: Kalliola, Sanna Marketta

(57) **Abstract**

A computer implemented method including: receiving a tag identifier from a user device, concluding that a location storage does not comprise a valid location for the received tag identifier, obtaining location of the user device, and updating the location of the user device as a location associated with the received tag identifier in the location storage.

## Description

### TECHNICAL FIELD

The present invention generally relates to near field communication (NFC) tags and to determining location of NFC tags.

### BACKGROUND ART

Near Field Communication (NFC) is a form of short range communication technology enabling devices in close proximity with each other to interact. At least one of the interacting devices need to be an active device that initiates contact to the other device. The other device may be a passive device such as a passive Radio Frequency Identification (RFID) tag, which returns its content upon query by the active device. That is, in one operating mode, an active NFC device reads passive RFID or NFC tags. This allows various interactions between the users and their surroundings.

Smart posters are one application domain in which NFC can be used. A smart poster is a regular poster or a billboard or a sign that has one or more embedded NFC tags and a user may achieve different kind of actions by tapping (touching) the tags with an NFC enabled device (such as a mobile phone or other handheld device with NFC capabilities).

### SUMMARY

Various aspects of the invention provide new and inventive solutions that can be used in connection with smart posters or the like.

According to a first example aspect of the invention there is provided a method according to enclosed claim 1.

According to a second example aspect of the invention there is provided an apparatus according to enclosed claim 6.

According to a third example aspect of the invention there is provided a memory medium according to enclosed claim 12. The memory medium may be non-transitory.

According to a fourth example aspect of the invention there is provided an electronic tag according to enclosed claim 14.

Different non-binding example aspects of the present invention have been illustrated in the foregoing.

### BRIEF DESCRIPTION OF THE DRAWINGS

The invention will be described, by way of example only, with reference to the accompanying drawings, in which:
- Fig. 1: shows a flow diagram of a method according to an example embodiment;
- Fig. 2: shows a scenario according to an example embodiment;
- Fig. 3: shows a scenario according to another example embodiment; and
- Fig. 4: shows a block diagram of an apparatus according to an example embodiment.

### DETAILED DESCRIPTION

When a smart poster is delivered outdoors it may be desirable to note down the actual location or coordinates of each poster. The party that sets up a poster may be interested in serving location-based content for the users of the smart poster, or they may want to find out which locations are better for poster placement and user engagement than others, for example.

Noting down the locations of the posters manually for example in a database may be rather complicated and time-consuming, though.

An embodiment of the invention provides a solution for automatically updating location of a smart poster after the poster has been set up / during the poster is being set up.

An example embodiment provides a computer implemented method and a device implementing the method. The method comprises receiving at a web service a tag identifier from a user device, concluding that a location storage does not comprise a valid location for the received tag identifier, obtaining location of the user device, and updating the location of the user device as a location associated with the received tag identifier in the location storage.

An example embodiment provides an electronic information tag that is configured to be read over a short range communication connection and comprises a tag identifier. The tag is configured to instruct an apparatus reading the tag to access a web service and to provide the tag identifier to the web service. In an example embodiment the tag is configured to instruct the apparatus reading the tag to access the web service and to provide the tag identifier to the web service by using a query comprising the tag identifier.

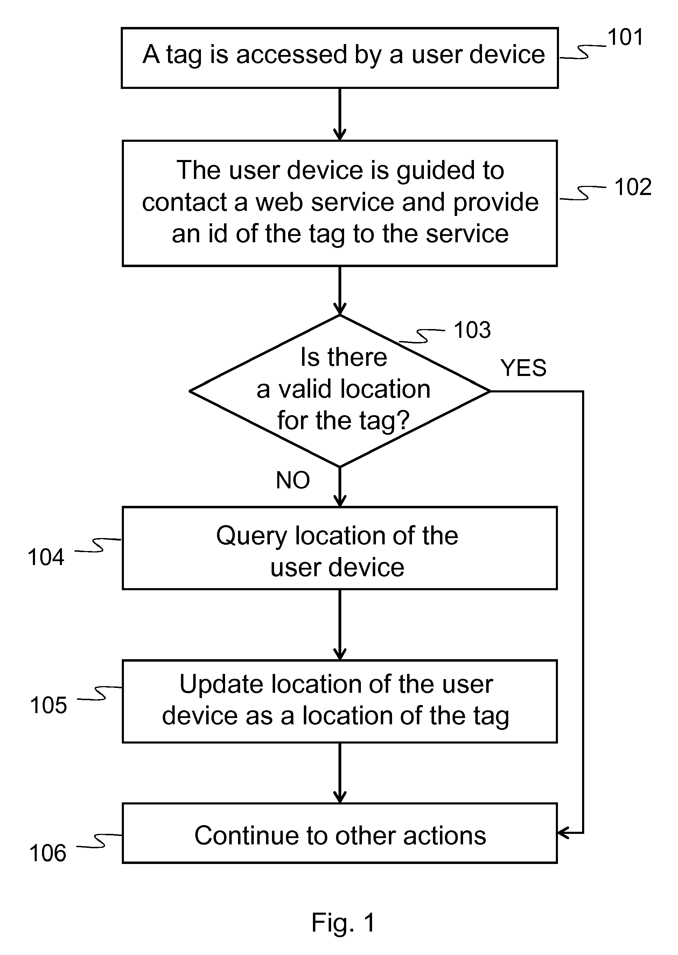

Figure 1 shows a flow diagram of a method according to an example embodiment.

In phase 101, a tag is accessed by an NFC enabled user device. The tag may be a tag in a smart poster, for example. In practice the user of the NFC enabled user device (such as a mobile phone) touches the tag with the user device.

In phase 102, the user device is guided to contact a web service and to provide an identifier of the tag to the service. In one practical implementation the tag comprises an URL which goes to the web service. The URL may trigger a browser in the user device to send a HTTP GET query to the URL. Alternatively, a HTTP POST query or a HTTP HEAD query may be used. In an example embodiment the URL contains the identifier of the tag. For example: http://www.thinglink.com/tag/12345?id=32789198. In an example embodiment the identifier of the tag is a unique identifier for one tag. In another embodiment the identifier of the tag is an identifier of a collection of tags or an identifier of a smart poster (which equals to a collection of tags in a single poster). In an alternative implementation the content of the tag triggers an application in the user device and guides the application to access the web service.

In phase 103, the web service queries from a location storage (e.g. a database) whether there is a valid location for the tag. This is performed on the basis of the identifier of the tag received from the user device for example in the URL or HTTP GET query or some other suitable query. In an example the location storage comprises tag identifiers and associated locations. The location storage may comprise tag identifiers without a location or it may be configured to store only tag identifiers that have an associated location. That is, the result of the query may be that
1) the tag identifier is found and there is an associated valid location for the tag identifier,
2) the tag identifier is found, but an associated location for the tag identifier is not found, or
3) the tag identifier is not found from the location storage.

As a result of the option 1) the process continues to phase 106, wherein the process continues to other actions, for example on the basis of the original purpose of the tag. That is, in this phase the user of the NFC device may be provided with some specific content associated with the tag. In an example, the server performs whatever calculations may be demanded and may return location-specific content or just engage in statistics.

As a result of the option 2) or 3) the process continues to phase 104 and queries or obtains location of the user device that sent the identifier of the tag. The location may be queried from the user device or from telecommunication operator systems.

The location may be queried from the user device through a location API of the browser or the application that the user is using to read the tag. In an example embodiment the querying of the location from the user device is performed by sending to the user device a program code component (such as a Javascript component) which queries a location API in the user device and sends the location received through the API to the server.

The user device may use any suitable method for determining the location of the user device. For example one of the following methods may be used: 1) GPS (and variants, such as A-GPS), 2) cell-tower based location determination, 3) WiFi triangulation and 4) asking from the user of the device.

In phase 105, the location of the user device is updated as a location of the tag in the location storage. In case the tag identifier was not found from the location storage, a new entry may be created for the tag identifier in this phase. Now that the location storage is updated the next user accessing the tag is not bothered with querying of the location, since now there is a valid location for the tag in the location storage. Once the location is stored in the location storage, the location is available for future reference for example for location specific poster/tag statistics or for providing location specific services for users near certain poster/tag or for some other location specific purpose. That is, for the future users of the tag, the location of the tag in the location storage may be used as location of the users and employed in generating location specific services to the users.

Thereafter the process continues to other actions in phase 106 as discussed above.

In an example embodiment, the user of the user device is given a possibility to choose whether they want to give their location to the service or not in phase 104. For example the program code component sent to the user device may ask the user, if the location can be given or not. If the user chooses to give the location, the process continues as discussed above and if the user chooses not to give the location, the process continues to other actions in phase 106 and the location the next user accessing the tag is queried in future.

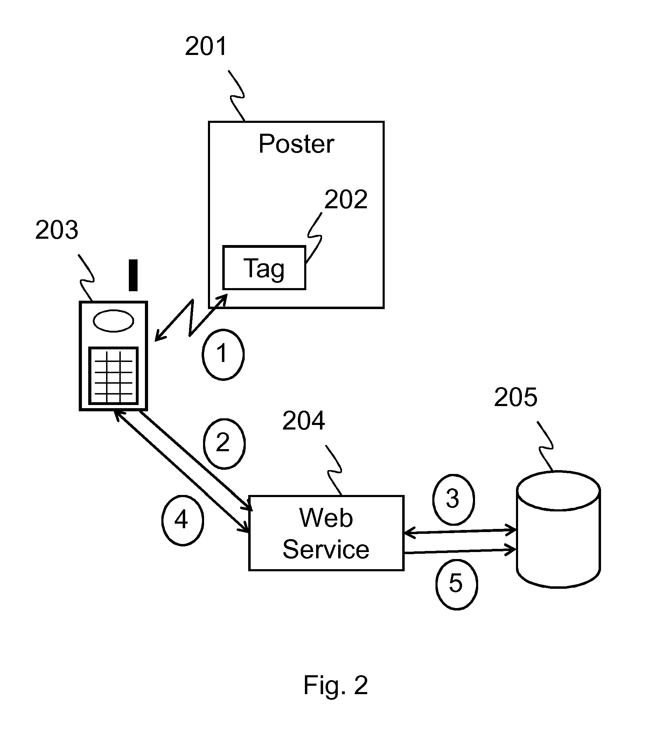

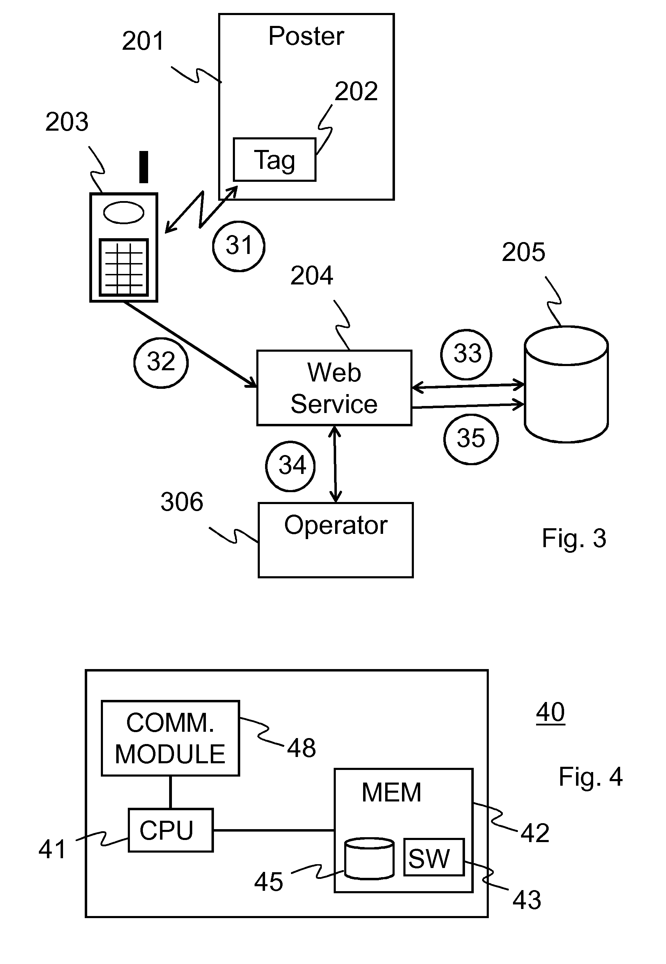

Figures 2 and 3 illustrate scenarios in which the method of Figure 1 can be implemented.

The scenario of Figure 2 comprises a poster 201 (a billboard or a sign) that comprises an electronic tag 202 such as an NFC tag. Further the scenario comprises a user device 203 capable of reading electronic tags, such as the tag 202, a web service 204 and a database or other storage means 205 associated with the web service 204. It must be noted that the database 205 may be part of the web service 204 and is not necessarily a separate physical device.

The circled numbers in Figure 2 illustrate operation according to an example embodiment:
1. The user device 203 reads the tag 202. That is, the user of the user device 203 taps or touches the tag 202 with the user device 203.
2. The user device 203 contacts the web service 204 on the basis of the content of the tag 202 and sends to the web service 204 an identifier associated with the tag 202.
3. The web service 204 queries from the database 205 whether there is a valid location for the identifier associated with the tag. In this example the answer is no.
4. The web service requests and receives the location of the user device 203 from the user device 203.
5. The web service 204 updates the location of the user device as a location for the tag identifier in the database 205.

The scenario of Figure 3 comprises similar elements 201-205 as Figure 2 and in addition a server of a telecommunication operator 306.

The circled numbers in Figure 3 illustrate operation according to an example embodiment:
31. The user device 203 reads the tag 202. That is, the user of the user device 203 taps or touches the tag 202 with the user device 203.
32. The user device 203 contacts the web service 204 on the basis of the content of the tag 202 and sends to the web service 204 an identifier associated with the tag 202.
33.The web service 204 queries from the database 205 whether there is a valid location for the identifier associated with the tag. In this example the answer is no.
34.The web service requests and receives the location of the user device 203 from the server 306. In an example embodiment the user device 203 sends in step 32 to the web service 204 an identifier identifying the user device 203, e.g. a phone number of the user device. This identifier is then used for obtaining the location of the user device 203 from the operator server 306. The identifier may be queried from the user device 203 is a separate step, too.
35. The web service 204 updates the location of the user device as a location for the tag identifier in the database 205.

Embodiments of the present invention may be implemented in software, hardware, application logic or a combination of software, hardware and/or application logic. The software, application logic and/or hardware may reside on a server of a service provider (such as the web service 204 of Figure 2 or 3).

In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or some other electronic device, with an example of such device described and depicted in Figure 4 below. The computer-readable medium may be a digital data storage such as a data disc or diskette, optical storage, magnetic storage, or opto-magnetic storage. The computer-readable medium may be formed into a device without other substantial functions than storing memory or it may be formed as part of a device with other functions, including but not limited to a memory of a computer, a chip set, and a sub assembly of an electronic device.

Figure 4 shows an example block diagram of an apparatus 40 according to certain example embodiments of the invention. The apparatus 40 may be implemented on a general purpose computer or a server for example and it may provide the web service 204 of Figure 2 or 3.

The apparatus 40 comprises at least one memory 42 configured to store computer program code (or software) 43. The memory 42 may comprise a database 45, but this is not mandatory. The apparatus 40 further comprises at least one processor 41 for controlling the operation of the apparatus 40 using the computer program code 43. Additionally the apparatus 40 comprises a communication module 48.

The processor 41 may be a master control unit (MCU). Alternatively, the processor 41 may be a microprocessor, a digital signal processor (DSP), an application specific integrated circuit (ASIC), a field programmable gate array, a microcontroller or a combination of such elements. Figure 4 shows one processor 41, but the apparatus 40 may comprise a plurality of processors 41.

The memory 42 may be, for example, random access memory, flash memory, hard disk, hard disk array, optical storage, memory stick, memory card and/or magnetic memory. The apparatus 40 may comprise a plurality of memories. The memory 42 may be constructed as a part of the apparatus 40 or it may be inserted into a slot, port, or the like of the apparatus 40 by a user. The memory 42 may serve the sole purpose of storing data, or it may be constructed as a part of an apparatus serving other purposes, such as processing data. The database 45 may be for example an SQL-database. The database may be used for storing location information of smart posters.

The communication module 48 may be for example a fixed line communication module, e.g. an Ethernet or LAN communication module or even a radio communication module, e.g., a WLAN, GSM/GPRS, or WCDMA radio module.

The processor 41 in combination with the computer program 43 and the communication module 48 is configured to implement at least some features of various embodiments of the invention described above.

A skilled person appreciates that in addition to the elements shown in Figure 4, the apparatus 40 may comprise other elements, such as batteries, microphones, displays, as well as additional circuitry such as input/output (I/O) circuitry, memory chips, and the like.

Various embodiments of the invention provide the following advantageous effects
1. Automated way of updating tag / poster location.
2. No further location queries are needed after a valid location is obtained. Therefore future users of the tags / smart posters are not bothered with location queries.
3. In practice it is likely that the person who sets up a poster is the first one to tap on the tags of the poster to ensure that they work, and hence it may be that only location of this person is queried and no actual casual users ever receive location queries.
4. After the tag locations have been recorded in a database, it is possible to conclude user location on the basis of the location of a tag accessed by the user. This may be used for example for providing location based services.

Various embodiments have been presented. It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention. It is also noted that the above embodiments are used merely to explain selected aspects or steps that may be utilized in implementations of the present invention. Some features may be presented only with reference to certain example embodiments of the invention. It should be appreciated that corresponding features may apply to other embodiments as well.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A computer implemented method comprising:
receiving at a web service a tag identifier from a user device,
concluding that a location storage does not comprise a valid location for the received tag identifier,
obtaining location of the user device, and
updating the location of the user device as a location associated with the received tag identifier in the location storage.

2. The method of claim 1, further comprising
querying and receiving the location of the user device from the user device.

3. The method of claim 2, wherein the location of the user device is queried by sending to the user device a program code component configured to obtain the location of the user device and to send the location to the web service.

4. The method of claim 1, further comprising
querying and receiving the location of the user device from a telecommunication operator system.

5. The method of any of preceding claims, wherein the tag identifier is received in a HTTP GET query.

6. An apparatus comprising:
a processor; and
a memory including computer program code; wherein
the memory and the computer program code in combination with the processor, are configured to cause the apparatus to perform:
receiving a tag identifier from a user device,
concluding that a location storage does not comprise a valid location for the received tag identifier,
obtaining location of the user device, and
updating the location of the user device as a location associated with the received tag identifier in the location storage.

7. The apparatus of claim 6, wherein the memory and the computer program code in combination with the processor, are configured to cause the apparatus to perform:
querying and receiving the location of the user device from the user device.

8. The apparatus of claim 7, wherein the memory and the computer program code in combination with the processor, are configured to cause the apparatus to query the location of the user device by sending to the user device a program code component configured to obtain the location of the user device and to send the location to the web service.

9. The apparatus of claim 6, wherein the memory and the computer program code in combination with the processor, are configured to cause the apparatus to perform:
querying and receiving the location of the user device from a telecommunication operator system.

10. The apparatus of any of claims 6 to 9, wherein the tag identifier is received in a HTTP POST query.

11. The apparatus of any of claims 6 to 9, wherein the tag identifier is received in a HTTP HEAD query.

12. A memory medium embodying computer executable program code configured to be executed by a processor of an apparatus, to cause the apparatus to perform:
receiving a tag identifier from a user device,
concluding that a location storage does not comprise a valid location for the received tag identifier,
obtaining location of the user device, and
updating the location of the user device as a location associated with the received tag identifier in the location storage.

13. The memory medium of claim 12, wherein the computer executable program code when executed by a processor of an apparatus, is further configured to cause the apparatus to perform the method of any of claims 2 to 5.

14. An electronic information tag configured to be read over a short range communication connection and comprising a tag identifier, wherein the tag is configured to instruct an apparatus reading the tag to access a web service and to provide the tag identifier to the web service.

15. The electronic information tag of claim 14, wherein the tag is configured to instruct the apparatus reading the tag to access the web service and to provide the tag identifier to the web service by using a query comprising the tag identifier.
